Europäisches Patentamt

European Patent Office

Office européen des brevets

(11) Publication number: **0 199 910 B1**

(12) **EUROPEAN PATENT SPECIFICATION**

(45) Date of publication of patent specification: **01.07.92**   (51) Int. Cl.⁵: **G06K 11/06**

(21) Application number: **86101882.8**

(22) Date of filing: **14.02.86**

(54) **Apparatus for detecting a location of an object on a tablet.**

(30) Priority: **01.04.85 US 718928**

(43) Date of publication of application:
**10.12.86 Bulletin 86/45**

(45) Publication of the grant of the patent:
**01.07.92 Bulletin 92/27**

(84) Designated Contracting States:
**DE FR GB IT**

(56) References cited:
**US-A- 3 975 592**
**US-A- 3 999 012**

(73) Proprietor: **Hewlett-Packard Company
Mail Stop 20 B-O, 3000 Hanover Street
Palo Alto, California 94304(US)**

(72) Inventor: **Malzbender, Thomas
121 Killean Court
Sunnyvale California 94086(US)**
Inventor: **Berke, W. Mike
655 S. Fairoaks, Apt. P-217
Sunnyvale California 94086(US)**

(74) Representative: **KOHLER SCHMID + PARTNER
Patentanwälte
Ruppmannstrasse 27
W-7000 Stuttgart 80(DE)**

Rank Xerox (UK) Business Services

**Description**

The present invention relates to an apparatus for detecting a location of an object on a tablet in accordance with the precharacterizing part of claim 1. Such an apparatus is known from US-A-3 999 012.

A prior art graphics tablet might include a platen which contains an X-Y grid of wires on a pc board. For instance, a graphics tablet model number HP9111A made by Hewlett-Packard Company of Palo Alto, California has 56 wires in the X-direction and 46 wires in the Y-direction. Typically in the prior art each trace has required its own wire driving circuitry. This circuitry adds significant cost to the manufacture and design of a graphics tablet.

The apparatus known from US-A-3 999 012 has a reduced number of X- and Y-drivers. However, the group arrangement of X- and Y-wires effects a relatively complicated wiring pattern on the tablet.

The US-A-3 975 592 discloses means for determining the proximity of a probe relative to a plurality of conductors.

It is an object of the invention to reduce the cost of the drivers circuitry used to energize the row- and column wire traces on the graphics tablet and to achieve a simple arrangement of these row and column wire traces on the tablet.

The object is solved in accordance with the characterizing features of claim 1.

The dependent claims characterize advantageous developments thereof.

The invention will be explained hereafter in detail and described with reference to the embodiments shown in the drawing. The features apparent from the specification and the drawing may be used in other embodiments of the invention either individually or in any desired combination thereof. In the drawing:

Figure 1 shows a graphics tablet with an X-Y grid of row- and column wires embedded thereon in accordance with a preferred embodiment of the present invention.

Figure 2 is an enlarged diagram of a portion of the grid of row- and column wires shown in Figure 1.

Figure 3 shows another graphics tablet with an X-Y grid of row- and column wires embedded thereon in accordance with another embodiment of the present invention.

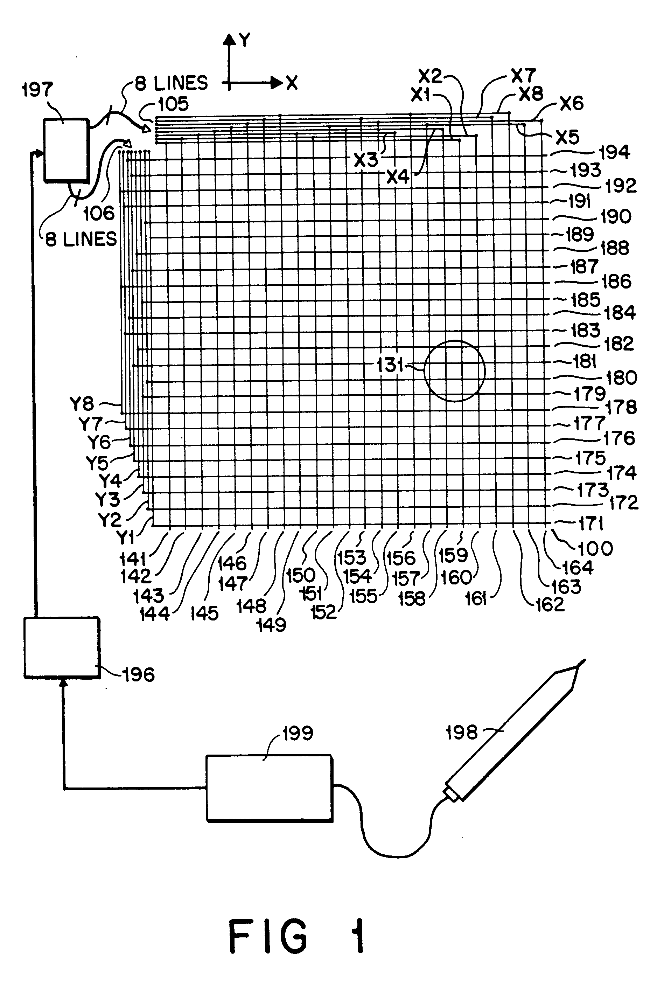

Figure 1 shows an X-Y grid of row- and column wires organized on a graphics tablet 100. The X-Y grid of the row- and column wires includes row wires 141-164 used to determine locations in the X-direction and column wires 171-194 used to determine locations in the Y-direction. Also on the graphics tablet 100, row driver lines X1 to X8 are coupled to driver circuitry 197 at driver line ends 105. Column driver lines Y1 to Y8 are coupled to driver circuitry 197 at driver line ends 106. The column wires 171-194 are coupled to the column driver lines Y1-Y8 in groups and in permuted order as shown. Similarly, the row wires 141-164 are coupled to the row driver lines X1-X8 in groups and in permuted order as shown.

The following table lists the row wires 141-164 and indicates which row driver line from the driver lines X1-X8 is coupled to each row wire.

Table 1

| Row-wire | Row driver line connected thereto |
|----------|-----------------------------------|
| 141 | X1 |
| 142 | X2 |
| 143 | X3 |
| 144 | X4 |
| 145 | X5 |
| 146 | X6 |
| 147 | X7 |
| 148 | X8 |
| 149 | X3 |
| 150 | X2 |
| 151 | X5 |
| 152 | X4 |
| 153 | X7 |
| 154 | X6 |
| 155 | X3 |
| 156 | X8 |
| 157 | X5 |
| 158 | X4 |
| 159 | X1 |
| 160 | X2 |
| 161 | X7 |
| 162 | X8 |
| 163 | X5 |
| 164 | X6 |

Similarly the following table 2 lists the column wires 171-194 and indicates which column driver line from driver lines Y1-Y8 is coupled to each column wire.

Table 2

| Column wire | Column driver line connected thereto |
|:-----------:|:-----------------------------------:|
| 171 | Y1 |
| 172 | Y2 |
| 173 | Y3 |
| 174 | Y4 |
| 175 | Y5 |
| 176 | Y6 |
| 177 | Y7 |
| 178 | Y8 |
| 179 | Y3 |
| 180 | Y2 |
| 181 | Y5 |
| 182 | Y4 |
| 183 | Y7 |
| 184 | Y6 |
| 185 | Y3 |
| 186 | Y8 |
| 187 | Y5 |
| 188 | Y4 |
| 189 | Y1 |
| 190 | Y2 |
| 191 | Y7 |
| 192 | Y8 |
| 193 | Y5 |
| 194 | Y6 |

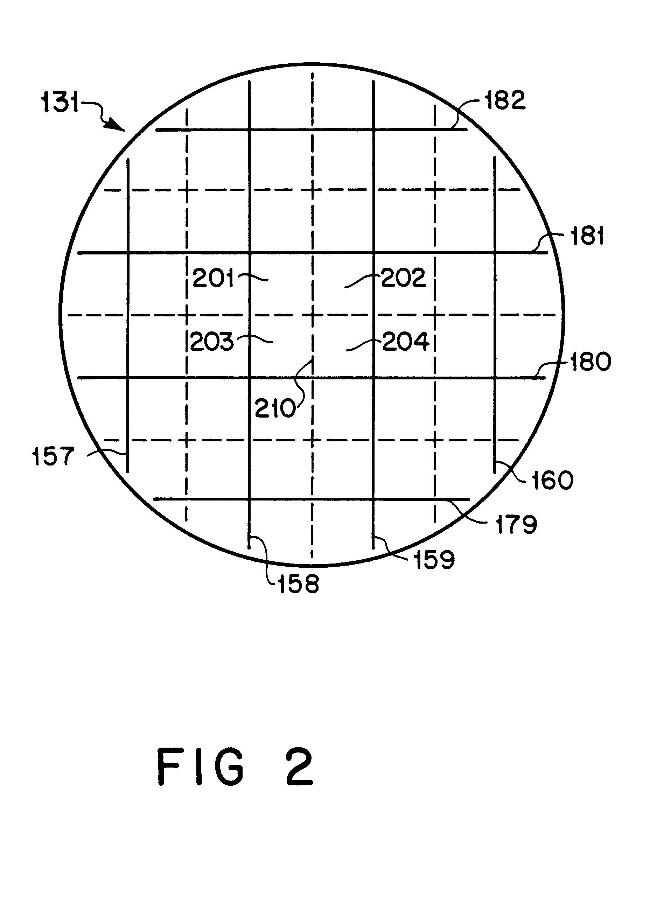

The X-Y grid of row and column wires interfaces to driver circuitry 197 by means of ends 105 of row driver lines X1-X8 and by means of ends 106 of column lines Y1-Y8. Driver circuitry 197 is coupled to a microprocessor 196. When a stylus 198 or other signal detecting device is placed on the graphics tablet a coarse location can be determined by sequentially placing a signal on each row driver line X1-X8 and measuring the strength of the signal received by stylus 198. Sensing circuitry 199 coupled to stylus 198 measures the relative strength of the signals and gives this information to microprocessor. For instance, the three driver lines for the X-direction (i.e., row driver lines X1-X8) from which stylus 198 receives the strongest signals are used to determine an address in the X-direction for the sector location of stylus 198. Likewise, the three column lines for the Y-direction (i.e. column driver lines Y1-Y8) from which stylus 198 receives the strongest signal are used to determine an address in the Y-direction for the sector location of stylus 198. A section 131 of array 100 is shown in Figure 2 for further explanation of how addresses are derived.

In Figure 2, row wires 157, 158, 159 and 160 for the X-direction and column wires 179, 180, 181 and 182 for the Y-direction are shown. From Table 1, row wire 157 is coupled to row driver line X5, row wire 158 is coupled to row driver line X4, row wire 159 is coupled to row driver line X1, and row wire 160 is coupled to row driver line X2. From Table 2, column wire 179 is coupled to column driver line Y3, column wire 180 is coupled to column driver line Y2, column wire 181 is coupled to column driver line Y5, and column wire 182 is coupled to column driver line Y4.

The strength of the signals coupled from row wires 141-164 and column wires 171-194 to stylus 198 can be used to determine which sector stylus 198 is placed in. For instance, if stylus 198 is placed in a sector 201, for determination of the X-direction, stylus 198 would be closest to row wire 158, second closest to row wire 159 and third closest to row wire 157. Therefore, for row driver lines for the X-direction stylus 198 would receive the strongest signal from row driver line X4, the second strongest signal from row driver line X1 and the third strongest signal from row driver line X5. Thus, preserving the order of strongest to third strongest, the address for sector 201 in the X-direction would be X4, X1, X5, or X(415). Likewise, when stylus 198 is in sector 201, for determination of the Y-direction, stylus 198 would be closest to column wire 181, second closest to column wire 180 and third closest to column wire 182. Therefore, for column driver lines in the Y-direction stylus 198 would receive the strongest signal from the column driver line Y5, the second strongest signal from column driver line Y2 and the third strongest signal from column driver line Y4. Thus again preserving the order of strongest to third strongest, the address for sector 201 in the Y-direction would be Y5, Y2, Y4, or Y(524). The address for sector 201 may thus be written X(415), Y(524).

Similarly, the addresses for a sector 202, a sector 203 and a sector 204 may be calculated. The address for sector 202 is X(142), Y(524); the address for sector 203 is X(415), Y(253); and the address for sector 204 is X(142), Y(253).

Care must be taken in selecting the ordering of the coupling of the driver lines to the traces to insure each sector on a board has a unique address. Depending upon the size of the graphics board and the number of driver lines used, it may be desirable to calculate a unique address by using other than three driver lines for each direction (i.e., three row driver lines for the X-direction and three column driver lines for the Y-direction). For instance, the nearest two wires or the nearest four wires may be used to calculate a unique address for each sector in each direction. Also, it would be possible to originate a signal from stylus 198 and detect signals on each of the driver lines. A relatively strong signal received by a particular driver line would indicate that stylus 198 contacts the graphics board relatively close to a trace wire coupled to that driver wire.

Additionally, traces may be ordered in such a way as to avoid erroneous data. For instance, if stylus 198 is in sector 201 but very close to a border 210 between sector 201 and 202, then the unique address determined in the X-direction should be X(415). However, noise in the system might lead to an erroneous determination that the address is X(412). Similarly, if stylus 198 is in sector 202 but very close to border 210, then noise in the system may erroneously lead to determination the address in the X-direction is X(145) rather than the correct X(142). By proper ordering of the traces so that addresses X(412) and X(145) do not uniquely address another sector, (as has been done in the preferred embodiment), these addresses, although erroneously determined, may still be used to reference the location where stylus 198 is located.

The above discussion has centered on locating a sector in which stylus 198 is located. Once the sector is located, if a more precise location needs to be determined, this can be done using a simple centroid calculation based on the relative strength of signals received from the three nearest traces.

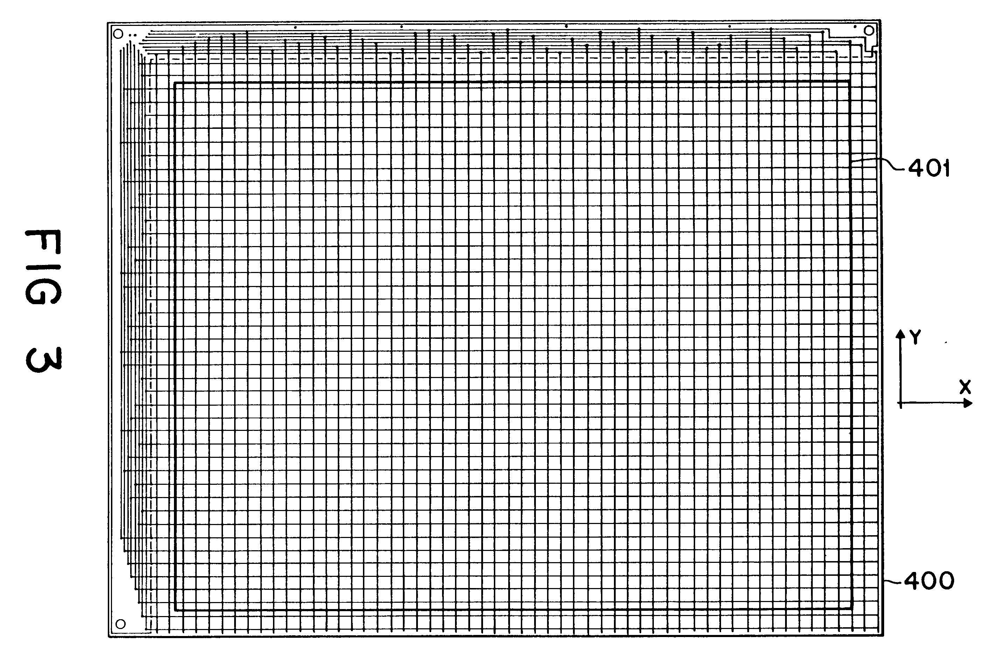

Figure 3 shows a graphics tablet array 400 using eight row driver lines for the X-direction and eight column driver lines for the Y-direction. There are 56 row wires for determining location of a stylus in the Y-direction. Outline section 401 shows the area within which the graphics tablet array 400 is divided into sectors, each sector having a unique address.

**Claims**

1. An apparatus for detecting a location of an object on a tablet (100), the apparatus comprising:
   - a plurality of row wires (141-164) laid out on the tablet in one dimension in groups, whereby row wires from different groups are connected together and then connected to row driver lines (X1-X8);
   - a plurality of row drivers (197) which are connected to the row driver lines (X1-X8);
   - first row detecting means (189) coupled to the said object for detecting a row driver line connected to a row wire that is closest to the object;
   - second row detecting means (199) for detecting the group to which the row wire closest to the object belongs;
   and
   - row address determining means (196) for determining an address of the location of the object based on the identities of the detected row driver lines and on the detected group,
   characterized in that
   I the order of the row driver lines respectively connected to the consecutive row wires in a group is permuted and thus identifies each group;
   II the first row detecting means detects in addition to the row driver line of the closest row wire the row driver line of the second and third closest row wires;
   III the second row detecting means includes means for identifying the group containing said closest row wires, the address of each group being defined by the order and identities of the first, second and third closest row driver lines so as to uniquely specify one group of row wires only.

2. The apparatus according to claim 1,
   characterized by additionally comprising
   - a plurality of column wires (171-194) laid out on the tablet (100) in groups perpendicularly to the plurality of row wires (141-164), whereby column wires from different groups are connected together and then connected to column driver lines (Y1-Y8);

- a plurality of column drivers (197) which are connected to the column driver lines (Y1-Y8), wherein the order of the column driver lines (Y1-Y8) are respectively connected to the consecutive column wires in a group is permuted and thus identifies each group;

- column detecting means (198) coupled to the object for detecting a column driver line connected to the column wire that is closest to the object and additionally for detecting the column driver lines of the second and third closest column wires; and

- second column detecting means (199) for identifying the group containing said closest column wires and the address of the location of the object based on the identities of the detected driver lines, the address of each group being defined by the order and the identities of the first, second and third closest column driver lines so as to uniquely specify one group of column wires only.

3. The apparatus according to claim 2,
characterized by additionally comprising

- signal generation means for generating a signal on each of the plurality of row driver lines (X1-X8) and on each of the plurality of column driver lines (X1-Y8), wherein said first row detecting means and said first column detecting means are detecting the relative strength of the signals generated on each of the plurality of row driver lines (X1-X8) and on each of the plurality of column driver lines (Y1-Y8).

4. The apparatus according to claim 3
characterized by additionally comprising
locating means (196) for locating the object based on the relative strength of signals generated by the signal generation means on at least two row driver lines and on at least two column driver lines and detected by the first and second row and column detecting means.

## Revendications

1. Appareil de détection d'une position d'un objet sur un plateau (100), appareil comprenant :

- plusieurs fils de rangée (141-164) disposés sut le plateau en groupes dans une dimension, les fils de rangée de groupes différents étant connectés les uns aux autres et ensuite connectés à des lignes d'attaque de rangée (X1-X8) ;

- de multiples éléments d'attaque de rangée (197) qui sont connectés aux lignes d'attaque de rangée (X1-X8) ;

- un premier moyen de détection de rangée (189) connecté audit objet pour détecter une ligne d'attaque de rangée connectée à un fil de rangée qui est le plus proche de l'objet ;

- un second moyen de détection de rangée (199) pour détecter le groupe auquel le fil de rangée le plus proche de l'objet appartient ; et

- des moyens de détermination d'une adresse de rangée (196) pour déterminer une adresse de la position de l'objet basée sur les identités des lignes d'attaque de rangée détectées et sur le groupe détecté,
caractérisé en ce que
I - l'ordre des lignes d'attaque de rangée connectées respectivement aux fils consécutifs de rangée d'un groupe est permuté et identifie ainsi chaque groupe ;
II - le premier moyen de détection de rangée détecte, en plus de la ligne d'attaque de rangée qui attaque le fil de rangée le plus proche, les lignes d'attaque de rangée qui attaquent les deuxième et troisième plus proches fils de rangée ;
III - le second moyen de détection de rangée comprend des moyens pour identifier le groupe contenant lesdits fils de rangée les plus proches, l'adresse de chaque groupe étant définie par l'ordre et les identités des première, deuxième et troisième plus proches lignes d'attaque de rangée de façon à spécifier de manière univoque un unique groupe de fils de rangée.

2. Appareil selon la revendication 1, caractérisé en ce qu'il comprend de plus

- de multiples fils de colonne (171-194) disposés le plateau (100) en groupes perpendiculairement aux multiples fils de rangée (141-164), les fils de colonne de groupes différents étant connectés les uns aux autres et ensuite connectés à des lignes d'attaque de colonne (Y1-Y8) ;

- de multiples éléments d'attaque de colonne (197) qui sont connectés aux lignes d'attaque de colonne (Y1-Y8), l'ordre dans lequel les lignes d'attaque de colonne (Y1-Y8) sont connectées respectivement aux fils consécutifs de colonne d'un groupe étant permuté et identifiant ainsi chaque groupe ;

- des moyens de détection de colonne (198) connectés à l'objet pour détecter une ligne d'attaque de colonne connectée au fil de colonne qui est le plus proche de l'objet et de plus pour détecter les lignes d'attaque de colonne des deuxième et troisième plus proches fils de colonne ; et

- des seconds moyens de détection de colonne (199) pour identifier le groupe contenant lesdits fils de colonne les plus proches et l'adresse de la position de l'objet basée sur les identités des lignes d'attaque détectées, l'adresse de chaque groupe étant définie par l'ordre et les identités des première, deuxième et troisième plus proches lignes d'attaque de colonne de façon à spécifier de manière univoque un unique groupe de fils de colonne.

3. Appareil selon la revendication 2, caractérisé en ce qu'il comprend de plus :
- un moyen de génération de signaux pour transmettre un signal sur chacune des multiples lignes d'attaque de rangée (X1-X8) et sur chacune des multiples lignes d'attaque de colonne (X1-Y8), ledit premier moyen de détection de rangée et ledit premier moyen de détection de colonne étant destinés à détecter la force relative des signaux transmis sur chacune des multiples lignes d'attaque de rangée (X1-X8) et sur chacune des multiples lignes d'attaque de colonne (Y1-Y8).

4. Appareil selon la revendication 3, caractérisé en ce qu'il comprend en plus
des moyens de localisation (196) pour localiser l'objet sur la base de la force relative des signaux transmis par le moyen je génération de signaux à au moins deux lignes d'attaque de rangée et à au moins deux lignes d'attaque de colonne et détectés par les premier et second moyens de détection de rangée et de colonne.

**Patentansprüche**

1. Vorrichtung zur Erfassung des Orts eines Objekts auf einem Tablett (100), die aufweist:
- eine Vielzahl von Zeilendrähten (141-164), die auf dem Tablett in Gruppen in eine Richtung gelegt sind, wobei Zeilendrähte verschiedener Gruppen miteinander und dann mit Zeilenansteuerleitungen (X1-X8) verbunden sind;
- eine Vielzahl von Zeilentreibern (197), die mit den Zeilenansteuerleitungen (X1-X8) verbunden sind;
- erste mit dem Objekt gekoppelte Zeilenerfassungsglieder (189) zum Erfassen einer mit einem dem Objekt am nächsten liegenden Zeilendraht verbundenen Zeilenansteuerleitung;
- zweite Zeilenerfassungsglieder (199), zur Erfassung der Gruppe zu der der dem Objekt am nächsten liegende Zeilendraht gehört; und
- Zeilenaddressenbestimmungsglieder (196), die eine Addresse des Objektorts aufgrund der Identitäten der erfaßten Zeilenansteuerleitungen und aufgrund der erfaßten Gruppe ermitteln, dadurch gekennzeichnet, daß
I die Reihenfolge der jeweils mit den aufeinanderfolgenden Zeilendrähten in einer Gruppe verbundenen Zeilenansteuerleitungen vertauscht ist und dadurch jede Gruppe gekennzeichnet ist;
II die ersten Zeilenerfassungsglieder zusätzlich zur Zeilenansteuerleitung des nächstliegenden Zeilendrahts die Zeilenansteuerleitung des zweit- und drittnächsten Zeilendrahtes erfassen;
III die zweiten Zeilenerfassungsglieder Mittel zur Identifikation der Gruppe aufweisen, welche die nächstliegenden Zeilendrähte enthält, wobei die Addresse jeder Gruppe durch die Reihenfolge und die Identität der nächstliegenden, der zweit- und drittnächsten Zeilenansteuerleitungen definiert ist und so einheitlich nur eine Gruppe von Zeilendrähten kennzeichnet.

2. Vorrichtung nach Anspruch 1, dadurch gekennzeichnet, daß sie außerdem aufweist:
- eine Vielzahl von Spaltendrähten (171-194), die auf dem Tablett (100) in Gruppen senkrecht zu der Vielzahl von Zeilendrähten (151', 164) gelegt sind, wobei Spaltendrähte aus unterschiedlichen Gruppen miteinander dann mit Spaltenansteuerleitungen (Y1-Y8) verbunden sind;
- eine Vielzahl von Spaltentreibern (197), die mit den Spaltenansteuerleitungen (Y1-Y8) verbunden sind, wobei die Reihenfolge der Spaltentreiberleitungen (Y1-Y8), die jeweils mit den aufeinanderfolgenden Spaltendrähten in einer Gruppe verbunden sind, vertauscht und dadurch jede Gruppe gekennzeichnet ist;
- Spaltenerfassungsglieder (198), die mit dem Objekt zur Erfassung einer mit einem dem Objekt am nächsten liegenden Spaltendraht verbundenen Spaltenansteuerleitung gekoppelt ist und die außerdem zur Erfassung der Spaltenansteuerleitung der zweitnächsten und drittnächsten Spaltendrähte dienen; und

- zweite Spaltenerfassungsglieder (199) zur Identifikation der die nächstliegenden Spaltendrähte enthaltenden Gruppe sowie der Addresse des Orts des Objekts aufgrund der Identitäten der erfaßten Ansteuerleitungen, wobei die Addresse jeder Gruppe durch die Reihenfolge und die Identitäten der nächsten, zweit- und drittnächsten Spaltenansteuerleitungen so definiert ist, daß sie einheitlich nur eine Gruppe von Spaltendrähten kennzeichnet.

3. Vorrichtung nach Anspruch 2, dadurch gekennzeichnet, daß sie außerdem aufweist:

- Signalerzeugungsglieder zur Erzeugung eines Signals auf jeder der Vielzahl von Zeilenansteuerleitungen (X1-X8) sowie auf jeder der Vielzahl der Spaltenansteuerleitungen (Y1-Y8), wobei die ersten Zeilenerfassungsglieder und die ersten Spaltenerfassungsglieder die relative Stärke der auf jeder der Vielzahl der Zeilenansteuerleitungen (X1-X8) und jeder der Vielzahl der Spaltenansteuerleitungen (Y1-Y8) erzeugten Signale erfassen.

4. Vorrichtung nach Anspruch 3, dadurch gekennzeichnet, daß sie außerdem aufweist:
Ortsermittlungsglieder (196) zur Lokalisation des Objekts aufgrund der relativen Signalstärke der durch die Signalerzeugungsglieder auf mindestens zwei Zeilenansteuerleitungen und mindestens zwei Spaltenansteuerleitungen erzeugten Signale, wie sie durch die ersten und die zweiten Zeilen- und Spalten-erfassungsglieder erfaßt wird.

FIG 1

# FIG 2

FIG 3